# EUROPEAN PATENT APPLICATION

(11) **EP 3 767 930 A1**
(43) Date of publication of application: **20.01.2021**
(21) Application number: 20185615.0
(22) Date of filing: 14.07.2020
(51) Int. Cl.: H04M 3/42, H04M 3/533

(54) **CALLMAIL**

(30) Priority: 19.07.2019 US 201916516895
(71) Applicant: T-Mobile USA, Inc., Bellevue, WA 98006 (US)
(72) Inventor: GEBREMARIAM, Shewangizaw, Bellevue, WA 98006 (US)
(74) Representative: Parker, Andrew James

(57) **Abstract**

Automatically providing an individualized voice message greeting to a specific caller who attempts to initiate a voice call with a called user during a period of unavailability. Receiving from a first telecommunications device associated with a first Mobile Station MS, an individualized voice message designated for a second telecommunications device associated with a second MS; receiving an indication that the second telecommunications device is attempting to initiate a voice call with the first telecommunications device; determining that the called user associated with the first telecommunications device is unavailable; and transmitting, in response to receiving the indication that the calling second telecommunications device is attempting to initiate a voice call with the first telecommunications device and determining that the called user is unavailable, the customized voice message to the second telecommunications device. A different caller will receive a standard generic greeting. The personalized greeting can have an expiration time after which the default greeting is transmitted.

## Description

### FIELD OF THE DISCLOSURE

The present disclosure generally relates to telecommunications and, more particularly, to techniques for automatically providing an individualized voice message to a specific individual who attempts to initiate a voice call with a user during a period of unavailability.

### BACKGROUND

The background description provided herein is for the purpose of generally presenting the context of the disclosure. Work of the presently named inventors, to the extent it is described in the background section, as well as aspects of the description that may not otherwise qualify as prior art at the time of filing, are neither expressly nor impliedly admitted as prior art against the present disclosure.

Users of voice telecommunication systems often set personally recorded or automatically generated voicemail greetings to be presented to callers whenever the user does not answer a call. Currently, when one user attempts to call another user who is unavailable (*e.g*., because the other user is not answering his or her phone, the user's phone is off, the other user's phone is in a location outside of a telecommunications network, the user's phone is engaged in a call, either the user or the carrier has barred or blacklisted the caller from the user, etc.), a general voicemail greeting associated with the unavailable user is played to the calling user. This general voicemail greeting typically simply indicates that the user is unavailable without providing any other information. Following such voicemail greeting, the calling user may record a message for the unavailable user to access at a later time. Regardless of the content of the voicemail greeting, however, the same voicemail greeting is presented to any caller when a call is unanswered.

### SUMMARY

In some instances, a user may want to provide specific information to another user who attempts to call while the user is unavailable. For instance, the user may want to provide information explaining why he or she is currently available or will be unavailable in the future, or other information that will be relevant to the other user during the period of unavailability. While it is possible for a user to change or update his or her general voicemail greeting to reflect a user's current status (*e.g*., to indicate that the user is on vacation, on medical leave, etc.), users do not typically update their general voicemail greetings to reflect short-term unavailability (*e.g*., to indicate that the user will be on a flight, presenting at a conference, at home sick, etc., and unable to take calls), in part because a user may easily forget to update their general voicemail greeting again at the conclusion of the short-term unavailability. That is, if a user updates his or her voicemail greeting before boarding a flight to indicate that the user will be unavailable while on the flight, but forgets to update his or her voicemail greeting again after arriving at his or her destination, the voicemail greeting relating to the flight might remain until the user remembers to change it, potentially confusing other users who attempt to call.

Moreover, the user may not want *anybody* who happens to call to know the reason for the unavailability, which may be personal in nature. That is, the user may want the information to be provided only to a specific other user if needed. Furthermore, the user may not want to unnecessarily broadcast the fact that he or she will be unavailable to the other user. That is, the user may not want to bother the other user by communicating his or her unavailability in advance. As another example, the user may not want to appear to be obviously unavailable unless the other user is actually trying to reach him or her. That is, the user may want the information relating to his or her unavailability to be provided only to specific users on a need-to-know basis.

Systems and methods for automatically providing an individualized voice message to a specific individual who attempts to initiate a voice call with a user during a period of unavailability are provided herein. Generally speaking, prior to a period during which a user knows he or she will be unavailable, the user may deposit a voice message to be played for a specific user who may attempt to call during the period of unavailability. That is, the user may record an individualized voice message and provide a Mobile Station (MS) number associated with the specific user who is to receive the voice message if he or she attempts to call during the period of unavailability. Those of skill in the art will understand that the MS number may include, for example, a Mobile Station International Subscriber Directory Number (MSISDN), an International Mobile Subscriber Identity (IMSI), an Integrated Services Digital Network (ISDN), or an International Mobile Equipment Identity (IMEI) associated with the MS. In some instances, the soon-to-be unavailable user may provide an expiration time for the voice message (*e.g*., at a time when the user knows the period of unavailability will be over). Accordingly, if a user with a telecommunications device having the provided MS attempts to call the unavailable user during the period of unavailability, the individualized voice message will be played, but if any other users attempts to call the unavailable user during the period of unavailability, a general voicemail message (*e.g*., a general voicemail greeting) associated with the unavailable user will be played.

In one embodiment, a computer-implemented method for automatically providing an individualized voice message to a specific individual who attempts to initiate a voice call with a user during a period of unavailability is provided. The computer-implemented method comprises: receiving, by a processor, from a first telecommunications device associated with a first MS, an individualized voice message for a second telecommunications device associated with a second MS; receiving, by the processor, an indication that the second telecommunications device is attempting to initiate a voice call with the first telecommunications device; determining, by the processor, that a first user associated with the first telecommunications device is not available; and transmitting, by the processor, in response to receiving the indication that the second telecommunications device is attempting to initiate a voice call with the first telecommunications device and determining that the first user is unavailable, the individualized voice message to the second telecommunications device.

In another embodiment, a system for automatically providing an individualized voice message to a specific individual who attempts to initiate a voice call with a user during a period of unavailability is provided. The system comprises: a first telecommunications device associated with a first MS; a second telecommunications device associated with a second MS; a telecommunications network associated with both the first MS and the second MS; and a server, comprising: one or more processors configured to interface with the first telecommunications device, the second telecommunications device, and the telecommunications network; and a non-transitory program memory communicatively coupled to the one or more processors and storing executable instructions that, when executed by the one or more processors, cause the processors to: receive, from the first telecommunications device, an individualized voice message for the second telecommunications device; receive an indication that the second telecommunications device is attempting to initiate a voice call with the first telecommunications device; determine that a first user associated with the first telecommunications device is not available; and transmit, in response to receiving the indication that the second telecommunications device is attempting to initiate a voice call with the first telecommunications device and determining that the first user is unavailable, the individualized voice message to the second telecommunications device.

In still another embodiment, a tangible, non-transitory computer-readable medium storing executable instructions automatically providing an individualized voice message to a specific individual who attempts to initiate a voice call with a user during a period of unavailability is provided. The executable instructions, when executed by at least one processor of a computer system, cause the processor to: receive, from a first telecommunications device associated with a first MS, an individualized voice message for a second telecommunications device associated with a second MS; receive an indication that the second telecommunications device is attempting to initiate a voice call with the first telecommunications device; determine that a first user associated with the first telecommunications device is not available; and transmit, in response to receiving the indication that the second telecommunications device is attempting to initiate a voice call with the first telecommunications device and determining that the first user is unavailable, the individualized voice message to the second telecommunications device.

In another embodiment, a system for automatically providing an individualized voice message to a specific individual who may be barred or blacklisted who then also attempts to initiate a voice call with a user is provided. The executable instructions, when executed by at least one processor of a computer system, cause the processor to: receive, from a first telecommunications device associated with a first MS, an individualized voice message for a second telecommunications device associated with a second MS; receive an indication that the second telecommunications device is attempting to initiate a voice call with the first telecommunications device; determine that either the network operator or first user associated with the first telecommunications device has barred or blacklisted the second MS; and transmit, in response to receiving the indication that the second telecommunications device is attempting to initiate a voice call with the first telecommunications device and determining that the first user is unavailable to the second MS, the individualized voice message to the second telecommunications device.

### BRIEF DESCRIPTION OF THE DRAWINGS

The figures described below depict various aspects of the systems and methods disclosed herein. Advantages will become more apparent to those skilled in the art from the following description of the embodiments which have been shown and described by way of illustration. As will be realized, the present embodiments may be capable of other and different embodiments, and their details are capable of modification in various respects. Accordingly, the drawings and description are to be regarded as illustrative in nature and not as restrictive. Further, wherever possible, the following description refers to the reference numerals included in the following figures, in which features depicted in multiple figures are designated with consistent reference numerals.
FIG. 1 illustrates a block diagram of an exemplary system for automatically providing an individualized voice message to a specific individual who attempts to initiate a voice call with a user during a period of unavailability, in accordance with some embodiments.
FIG. 2 illustrates a signal diagram associated with an exemplary communication process for automatically providing an individualized voice message to a specific individual who attempts to initiate a voice call with a user during a period of unavailability, in accordance with some embodiments.
FIG. 3 illustrates a flow diagram of an exemplary method for automatically providing an individualized voice message to a specific individual who attempts to initiate a voice call with a user during a period of unavailability, in accordance with some embodiments.

### DETAILED DESCRIPTION

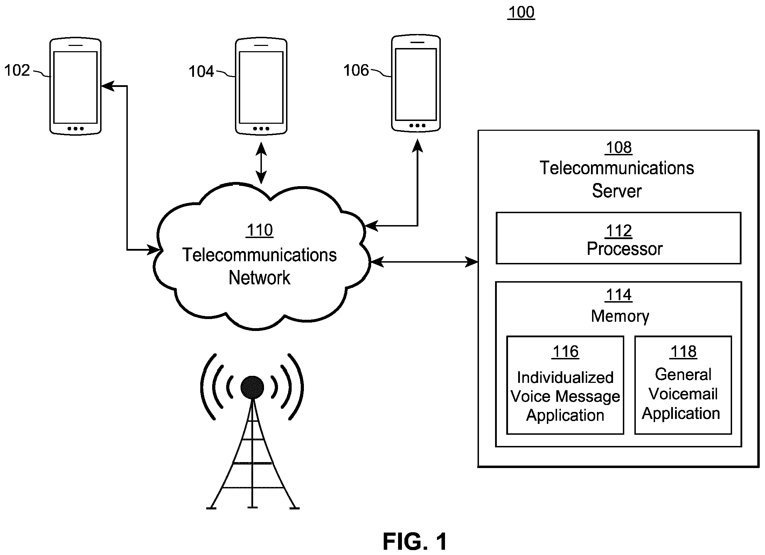

FIG. 1 illustrates a block diagram of an exemplary system 100 for automatically providing an individualized voice message to a specific individual who attempts to initiate a voice call with a user during a period of unavailability, in accordance with some embodiments. The high-level architecture illustrated in FIG. 1 may include both hardware and software applications, as well as various data communications channels for communicating data between the various hardware and software components, as is described below. The system 100 may include a first telecommunications device 102, a second telecommunications device 104 and a third telecommunications device 106. For example, the telecommunications devices 102-106 may include traditional landline phones, cordless phones, cellular phones, smart phones, PDA phones, desktop and portable computers, media players, home telecommunications hubs, or any other suitable telecommunications devices. Moreover, each of the telecommunications devices 102-106 may be associated with a unique Mobile Station (MS) number, such as an IMSI, IMEI, MSISDN, or ISDN number. Although only three telecommunication devices 102-106 are illustrated, it should be understood that the system 100 may include any number of such devices. The telecommunications devices 102-106 may be configured to wirelessly communicate with one another and with a telecommunications server 108 via a telecommunications network 110.

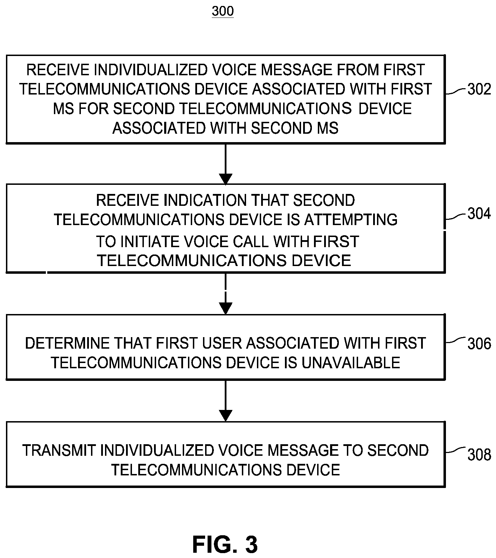

The telecommunications server 108 is configured to receive, store, and transmit general and individualized voicemail message or greetings when a user is unavailable or a call is unanswered, as described further herein. The telecommunications server 108 may include one or more processors 112, such as one or more microprocessors, controllers, and/or any other suitable type of processor. The telecommunications server 108 may further include a memory 114 (*e.g*., volatile memory, non-volatile memory) accessible by the one or more processors 112 (*e.g*., via a memory controller). The one or more processors 112 may interact with the memory 114 to obtain, for example, computer-readable instructions stored in the memory 114. Additionally or alternatively, computer-readable instructions may be stored on one or more removable media (*e.g*., a compact disc, a digital versatile disc, removable flash memory, etc.) that may be coupled to the telecommunications server 108 to provide access to the computer-readable instructions stored thereon. In particular, the computer-readable instructions stored on the memory 114 may include instructions for carrying out any of the steps of the method 300 described in greater detail below with respect to FIG. 3.

For instance, the memory 114 may include an individualized voice message application 116 configured to record and store audio files of individualized voice messages, such as an audio file containing an exemplary individualized voice message transmitted by the first telecommunications device 102 (via the telecommunications network 110) for a second telecommunications device 104. Moreover, the individualized voice message application 116 may be configured to transmit audio data from such audio files to appropriate recipients, such as playing the audio file containing the exemplary individualized voice message to the second telecommunications device 104 (via the telecommunications network 110) when the second telecommunications device 104 attempts to initiate a voice call with the first telecommunications device 102 at a time associated with the exemplary individualized voice message (*e.g*., when a user of the first telecommunications device 102 is unavailable). The memory 114 may further include a general voicemail application 118 configured to store audio files containing general voicemail messages (*i.e*., a general voicemail greeting) set by users of telecommunications devices 102-106. Furthermore, the general voicemail application 118 may be configured to transmit audio data associated with such audio files containing general voicemail messages (via the telecommunications network 110) to other callers or at other times. Continuing the example above, the general voicemail application 118 may play the general voicemail message set by the user of the first telecommunications device 102 to the third telecommunications device 106 (or any other telecommunications devices besides the telecommunications device for which the exemplary individualized voice message is intended) when the third telecommunications device 106 attempts to initiate a voice call with the first telecommunications device 102 at a time when a user of the first telecommunications device 102 is unavailable.

The telecommunications network 110 may be a wireless telecommunications network including wireless or cellular telecommunications links, but any type of wired or wireless connection may be included in the telecommunications network 110. For example, wired or wireless communications associated with traditional landline networks and IP-based networks, or any combination of these, provide suitable implementations. For cellular-based embodiments, at least a portion of the telecommunications network 110 may enable communication by the telecommunications devices 102-106, via networks utilizing any type of cellular-radio-based communication protocols such as GSM (Global System for Mobile communications), UMTS (Universal Mobile Telecommunications System), CDMA (Code Division Multiple Access), D-AMPS (Digital Advanced Mobile Telecommunications device System), TDMA (Time Division Multiple Access), iDEN (Integrated Digital Enhanced Network), GPRS (General Packet Radio Service), EDGE (Enhanced Data rates for GSM Evolution), WCDMA (Wideband Code Division Multiple Access), HSPA (High Speed Packet Access), HSPA+, LTE (Long Term Evolution), LTE Advanced, 5G including 5G new radio (5G NR) and other variants. The telecommunications network 110 may also enable or permit communication between or with the telecommunications devices 102-106 via a peer-to-peer or ad hoc system utilizing appropriate communication protocols such as Bluetooth®, IEEE 802.11, IEEE 802.16, IEEE 802.20 and the like.

The telecommunications network 110 may include a variety of components for proper operation and communication with the telecommunications devices 102-106. For example, the telecommunications network 110 may include wireless communication capabilities for connecting a plurality of base stations (which may include traditional cellular base stations, femtocells, picocells, WiFi access points and other access points) and one or more telecommunications servers 108, such as network service provider (NSP) servers, Internet service provider servers, home network servers, enterprise servers, or other server computing devices for controlling communications on the telecommunications network 110. The one or more telecommunications servers 108 may be part of a data center, server farm, computing cluster, storage area network, or other architecture for receiving, processing and transmitting communications and application threads and processes, as well as for storing content to be shared between telecommunications devices 102-106.

The telecommunications network 110 may also include wire-based networks (*e.g*., telephone, cable, or optical fiber) and other wireless networks (*e.g*., cellular or satellite). The telecommunications network 110 may use any number of protocols and configurations to enable the telecommunications devices 102-106 to access other devices and resources. The telecommunications network 110 may include several types of circuit-switched telephone networks, such as a Public Switched Telephone Network (PSTN) and packet-switched networks. Thus, telecommunications network 110 may be able to communicate with landline telephones via the PSTN, and may further include a plurality of wireless communication networks maintained by a plurality of different wireless network service providers.

Furthermore, the telecommunications network 110 may also include or be in communication with the Internet. For example, the telecommunications server 108 may configured to communicate with the Internet. Thus, in some implementations or situations, the telecommunications devices 102-106 may access the Internet through wired or wireless communications via the telecommunications server 108, such as via Evolution-Data Optimized (EVDO) communications or other technologies. In other implementations or situations, telecommunications devices 102-106 can access the Internet directly, such as via a wireless access point using Wi-Fi, WiMax, or the like.

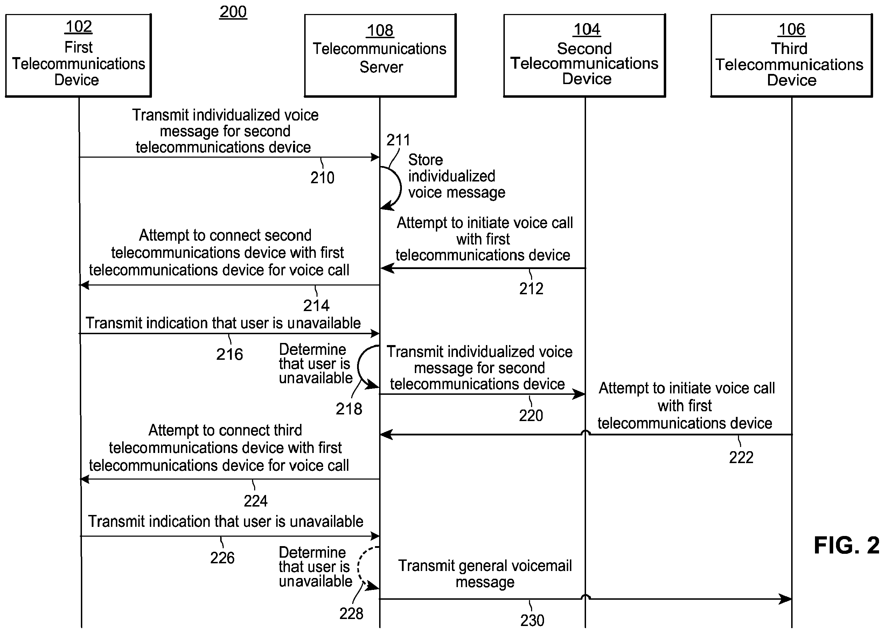

FIG. 2 illustrates a signal diagram associated with an exemplary communication process 200 for automatically providing an individualized voice message to a specific individual who attempts to initiate a voice call with a user during a period of unavailability, in accordance with some embodiments. The communication process 200 includes communication between a first telecommunications device 102, a telecommunications server 108, and a second telecommunications device 104, which are communicatively connected by the telecommunication network 110, as described above.

The communication process 200 may begin when the first telecommunications device 102 transmits (line 210) an individualized voice message for the second telecommunications device 104 to the telecommunications server 108, *e.g.,* via the telecommunications network 110. The individualized voice message may include audio data of the voice of the user of the first telecommunications device 102 providing information for a user of the second telecommunications device 104. In addition to the content of the individualized voice message, the first telecommunications device 102 transmits data indicating one or more users (*e.g.*, based upon MS) to which the individualized voice message is to be presented. In some embodiments, additional criteria may be specified for use of the individualized voice message, such as (i) a start time for the message (which may be immediate or may be set to a specified future time), (ii) an end time for the message (which may be indefinitely until cancelled or may be a specified time or a specified duration after the start time), (iii) an indication of whether to attempt to contact the user (which may indicate that the individualized voice message should only be presented to the second telecommunications device 104 if the first telecommunications device 102 does not answer a call, or which may indicate the individualized voice message should be presented immediately without attempting to connect to the first telecommunications device 102), and/or (iv) an indication of whether the recipient should be permitted to leave a voicemail message following the individualized voice message. The telecommunications server 108 may store (line 211) the individualized voice message (*e.g*., as an audio file of a recording of the audio data) on a memory.

The second telecommunications device 104 may attempt to initiate (line 212) a voice call with the first telecommunications device 102, *e.g.,* via the telecommunications network 110. In particular, the second telecommunications device 104 may transmit a request that the telecommunications server 108 connect the second telecommunications device 104 and the first telecommunications device 102 for a voice call. The telecommunications server 108 may attempt to connect (line 214) the second telecommunications device 104 with the first telecommunications device 102 for a voice call via the telecommunications network 110. In response, the first telecommunications device 102 may transmit (line 216) an indication to the telecommunications server 108 that a user associated with the first telecommunications device 102 is available or is not available *e.g.,* via the telecommunications network 110. For example, the first telecommunications device 102 may transmit an indication that it has not received an indication (*e.g*., via a user interface) that a user has answered a call, *e.g.,* within a certain period of time (*e.g.*, within 15 seconds, within 30 seconds, etc.). Additionally or alternatively, in some examples, instead of the first telecommunications device 102 explicitly transmitting an indication that the user associated with the first telecommunications device 102 is not available, the first telecommunications device 102 may fail to respond to requests it receives from the telecommunications server 108 (*e.g*., because the telecommunications device 102 is outside of the range of a telecommunications network, because the telecommunications device 102 is switched off, etc.), implicitly indicating that the user associated with the first telecommunications device 102 is unavailable. In any case, the telecommunications server 108 may determine (line 218) that the user associated with the first telecommunications device 102 is unavailable.

In some embodiments, the telecommunications server 108 may first determine whether the user of the first telecommunications device 102 should be considered to be unavailable (line 218) prior to attempting to contact the first telecommunications device 102 at line 214. Such determination may include determining whether an individualized voice message has been stored for presentation to the caller (*i.*e., the second telecommunications device 104) with an indication to send calls from the caller directly to the individualized voice message for a period of time that includes the time of a current attempted call. In such embodiments, the telecommunications server 108 may not attempt to route the call to the first telecommunications device 102 if an individualized voice message is identified for the time and user, instead simply transmitting the stored individualized voice message to the second telecommunications device 104. Such embodiments may be used to enable a user to accept calls from other users, while presenting a prerecorded message to particular users.

Based on the indication that the user associated with the first telecommunications device 102 is unavailable and the attempt, by the second telecommunications device 104, to initiate a voice call with the first telecommunications device 102, the telecommunications server 108 may transmit (line 220) the stored individualized voice message to the second telecommunications device 104, *e.g.,* via the telecommunications network 110. This may include sending audio data of the content of the individualized voice message to the second telecommunications device 104 to play back the individualized voice message to the user of the second telecommunications device 104. In some embodiments, the user of the second telecommunications device 104 may be presented with an option to leave a voicemail message for the user of the first telecommunications device 102 after receiving the individualized voice message. In other embodiments, such option to leave a voicemail message may not be available to the user of the second telecommunications device 104. For example, the telecommunications server 108 may disconnect the call from the second telecommunications device 104 upon completion of the individualized voice message.

Moreover, in some examples, the third telecommunications device 106 (*i.e.,* a telecommunications device for which an individualized voice message has not been recorded or stored) may attempt to initiate (line 222) a voice call with the first telecommunications device 102. In particular, the third telecommunications device 106 may transmit a request, *e.g.,* via the telecommunications network 110, that the telecommunications server 108 connect the third telecommunications device 106 and the first telecommunications device 102 for a voice call. The telecommunications server 108 may attempt to connect (line 224) the third telecommunications device 106 with the first telecommunications device 102 for a voice call via the telecommunications network 110.

The first telecommunications device 102 may transmit (line 226) an indication to the telecommunications server 108 that a user associated with the first telecommunications device 102 is not available (*e.g*., as discussed above with respect to line 216), and the telecommunications server 108 may determine 228 that the user associated with the first telecommunications device 102 is unavailable.

Based on the indication that the user associated with the first telecommunications device 102 is unavailable and the attempt, by the third telecommunications device 106, to initiate a voice call with the first telecommunications device 102, the telecommunications server 108 may transmit (line 230) a general voicemail message associated with the first telecommunications device 102, *e.g.,* via the telecommunications network 110.

FIG. 3 illustrates a flow diagram of an exemplary method 300 for automatically providing an individualized voice message to a specific individual who attempts to initiate a voice call with a user during a period of unavailability, in accordance with some embodiments. One or more steps of the method 300 may be implemented as a set of instructions stored on a computer-readable memory 114 and executable on one or more processors 112.

A voice message from a first telecommunications device 102 associated with a first MS and individualized for a second telecommunications device 104 associated with a second MS may be received (block 302). In some examples, the first telecommunications device 102 and the second telecommunications device 104 may both be associated with the same telecommunications network 110.

For example, a first user associated with the first telecommunications device 102 may have specific information to communicate to a second user associated with the second telecommunications device 104 in the event that the second user attempts to call the first user while the first user is unavailable. The information may be private or personal in nature, or otherwise only relevant to the second user in particular and not to all users who may attempt to call the first user. Moreover, the first user may not want to bother the second user with the information unless the second user attempts to call the first user.

For instance, a first user "Alice" may want to leave an individualized voice message for a second user "Bob." Alice may dial a number associated with a service center and may be prompted to enter an MS for a user for whom she is leaving an individualized voice message, and may enter Bob's MS. Alice may then be prompted to record a voice message for Bob. Alice may record a message saying "Hi Bob, I'm on flight AA1234 to Florida right now and can't get on the phone. I'll call you when I land, which should be around 3:30 PM."

Additionally, in some examples, the individualized voice message may have one or more of a start time or an expiration time. For instance, the first user may set a specific time when the individualized voice message will begin (*e.g*., 12:00 PM) and when it will expire (*e.g*., 3:30 PM). As another example, a user may set a number of minutes or hours after which the individualized voice message will expire (*e.g.*, after 30 minutes, after six hours, after one day, after one week, etc.)

An indication that the second telecommunications device is attempting to initiate a voice call with the first telecommunications device may be received (block 304). For instance, a telecommunications server may receive an indication, via a telecommunications network, that the telecommunications device associated with Bob is attempting to initiate a voice call with the telecommunications device associated with Alice.

A determination (block 306) may be made that a first user associated with the first telecommunications device 102 is unavailable. For instance, determining that the first user associated with the first telecommunications device 102 is not available may include determining that the first telecommunications device 102 is currently outside of a telecommunications network 110 associated with the first MS (*e.g.*, because the first user is on an airplane, in a remote location, etc.) Moreover, as another example, determining that the first user associated with the first telecommunications device 102 is not available may include determining that the first telecommunications device 102 is currently turned off. Additionally, as another example, determining that the first user associated with the first telecommunications device 102 is not available may include determining that the first telecommunications device 102 has failed to accept the voice call initiated by the second telecommunications device 104 within a threshold period of time (*i.e*., the first telecommunications device 102 is not being answered by the first user within a certain amount of time).

As another example, determining the first user associated with the first telecommunications device 102 is unavailable may include determining the first user has selected an option to cause the telecommunications network 110 not to attempt to route a call from the second user of the second telecommunications device 104 to the first telecommunications device 102 during the period for which the individualized voice message is active (*e.g*., between 12:00 PM and 3:30 PM as specified by the first user upon setting up the individualized voice message). The telecommunications server 108 may set a flag in a user account associated with the first user at the time of setting the individualized voice message, which may then be checked by the telecommunications server 108 at the time of receiving the call from the second telecommunications device 104 to determine whether the first user is unavailable. In further embodiments, determining the first user associated with the first telecommunications device 102 is unavailable may include determining that the first user is to be considered unavailable to the second user associated with the second telecommunications device 104, either permanently or for a limited period. For example, the first user may designate the second user to be barred or blacklisted from contacting the first user. In such embodiments, the telecommunications server 108 may determine the first user is unavailable whenever the second telecommunications device 104 associated with the second user attempts to contact the first telecommunications device 102 associated with the first user, either during a specified period or at any time.

In response to receiving the indication that the second telecommunications device 104 is attempting to initiate a voice call with the first telecommunications device 102 and the determination that the first user is unavailable, the individualized voice message may be transmitted (block 308) from the telecommunications server 108 to the second telecommunications device 104. For instance, if Bob tries to call Alice and Alice does not answer her telecommunications device within a certain amount of time (*e.g*., after 30 seconds), Alice's individualized voice message for Bob may be transmitted to Bob's telecommunications device and played for Bob. In some embodiments, the second user of the second telecommunications device 104 may be presented with an option to leave a voicemail message for the first user after the individualized voice message.

However, in some examples, if the second telecommunications device 104 attempts to initiate a voice call with the first telecommunications device 012 when the first user is unavailable, but after the expiration time of the voice message, a general voicemail message (*i.e.,* a general voicemail greeting) associated with the first telecommunications device 102 may be transmitted to the second telecommunications device 104. For instance, if Alice's individualized voice message for Bob was set to expire after 3:30 PM, Bob called at 3:40 PM, and Alice failed to answer, Alice's general voicemail greeting (*e.g*., "Hi, this is Alice. I'm not available right now. Please leave a message.") would be transmitted to Bob's telecommunications device and played for Bob.

Moreover, in some examples, if a third telecommunications device 106 associated with a third MS attempts to initiate a voice call with the first telecommunications device 102 when the first user is unavailable, a general voicemail message (*i.e*., a general voicemail greeting) associated with the first telecommunications device 102 may be transmitted to the third telecommunications device 106. For instance, if another user "Colleen," for whom Alice had not recorded an individualized voicemail message, attempted to call Alice while Alice was unavailable, Alice's general voicemail message would be transmitted to Colleen's telecommunications device and played for Colleen.

Although the preceding text sets forth a detailed description of numerous different embodiments, it should be understood that the legal scope of the invention is defined by the words of the claims set forth at the end of this patent. The detailed description is to be construed as exemplary only and does not describe every possible embodiment, as describing every possible embodiment would be impractical, if not impossible. One could implement numerous alternate embodiments, using either current technology or technology developed after the filing date of this patent, which would still fall within the scope of the claims.

It should also be understood that, unless a term is expressly defined in this patent using the sentence "As used herein, the term '_' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term be limited, by implication or otherwise, to that single meaning.

Throughout this specification, unless indicated otherwise, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may likewise be implemented as a combined structure or component. Similarly, structures and functionality presented as a single component may be implemented as separate components. These and other variations, modifications, additions, and improvements fall within the scope of the subject matter herein.

Additionally, certain embodiments are described herein as including logic or a number of routines, subroutines, applications, or instructions. These may constitute either software (code embodied on a non-transitory, tangible machine-readable medium) or hardware. In hardware, the routines, etc., are tangible units capable of performing certain operations and may be configured or arranged in a certain manner. In example embodiments, one or more computer systems (*e.g*., a standalone, client or server computer system) or one or more hardware modules of a computer system (*e.g*., a processor or a group of processors) may be configured by software (*e.g*., an application or application portion) as a hardware module that operates to perform certain operations as described herein.

In various embodiments, a hardware module may be implemented mechanically or electronically. For example, a hardware module may comprise dedicated circuitry or logic that is permanently configured (*e.g*., as a special-purpose processor, such as a field programmable gate array (FPGA) or an application-specific integrated circuit (ASIC)) to perform certain operations. A hardware module may also comprise programmable logic or circuitry (*e.g*., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (*e.g*., configured by software) may be driven by cost and time considerations.

Hardware modules can provide information to, and receive information from, other hardware modules. Accordingly, the described hardware modules may be regarded as being communicatively coupled. Where multiple such hardware modules exist contemporaneously, communications may be achieved through signal transmission (*e.g.*, over appropriate circuits and buses) that connects the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (*e.g*., a collection of information).

The various operations of example methods described herein may be performed, at least partially, by one or more processors that are temporarily configured (*e.g*., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, in some embodiments, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but deployed across a number of machines. In some example embodiments, the one or more processors or processor-implemented modules may be located in a single geographic location (*e.g*., within a home environment, an office environment, or a server farm). In other example embodiments, the one or more processors or processor-implemented modules may be distributed across a number of geographic locations.

Unless specifically stated otherwise, discussions herein using words such as "processing," "computing," "calculating," "determining," "presenting," "displaying," or the like may refer to actions or processes of a machine (*e.g.,* a computer) that manipulates or transforms data represented as physical (*e.g*., electronic, magnetic, or optical) quantities within one or more memories (*e.g*., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" or "in some embodiments" in various places in the specification are not necessarily all referring to the same embodiment or embodiments.

Some embodiments may be described using the terms "coupled," "connected," "communicatively connected," or "communicatively coupled," along with their derivatives. These terms may refer to a direct physical connection or to an indirect (physical or communication) connection. For example, some embodiments may be described using the term "coupled" to indicate that two or more elements are in direct physical or electrical contact. The term "coupled," however, may also mean that two or more elements are not in direct contact with each other, but yet still co-operate or interact with each other. Unless expressly stated or required by the context of their use, the embodiments are not limited to direct connection.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the words "a" or "an" are employed to describe elements and components of the embodiments herein. This is done merely for convenience and to give a general sense of the description. This description, and the claims that follow, should be read to include one or at least one, and the singular also includes the plural unless the context clearly indicates otherwise.

Upon reading this disclosure, those of skill in the art will appreciate still additional alternative structural and functional designs for automatically providing an individualized voice message to a specific individual who attempts to initiate a voice call with a user during a period of unavailability. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the spirit and scope defined in the appended claims.

The particular features, structures, or characteristics of any specific embodiment may be combined in any suitable manner and in any suitable combination with one or more other embodiments, including the use of selected features without corresponding use of other features. In addition, many modifications may be made to adapt a particular application, situation or material to the essential scope and spirit of the present invention. It is to be understood that other variations and modifications of the embodiments of the present invention described and illustrated herein are possible in light of the teachings herein and are to be considered part of the spirit and scope of the present invention.

Finally, the patent claims at the end of this patent application are not intended to be construed under 35 U.S.C. § 112(f), unless traditional means-plus-function language is expressly recited, such as "means for" or "step for" language being explicitly recited in the claims.

The preferred aspects of the present disclosure may be summarized as follows:
1. A computer-implemented method for automatically providing an individualized voice message to a specific individual who attempts to initiate a voice call with a user during a period of unavailability, comprising:
   receiving, by a processor, from a first telecommunications device associated with a first Mobile Station (MS), an individualized voice message designated for a second telecommunications device associated with a second MS;
   receiving, by the processor, an indication that the second telecommunications device is attempting to initiate a voice call with the first telecommunications device;
   determining, by the processor, that a first user associated with the first telecommunications device is unavailable; and
   transmitting, by the processor, in response to receiving the indication that the second telecommunications device is attempting to initiate a voice call with the first telecommunications device and determining that the first user is unavailable, the individualized voice message to the second telecommunications device.
2. The computer-implemented method of aspect 1, further comprising:
   receiving, by the processor, an indication that a third telecommunications device associated with a third MS is attempting to initiate a voice call with the first telecommunications device; and
   transmitting, by the processor, in response to receiving the indication that the third telecommunications device is attempting to initiate a voice call with the first telecommunications device and determining that the first user is unavailable, a general voicemail message associated with the first telecommunications device.
3. The computer-implemented method of any one of the preceding aspects, in particular aspect 1, wherein the individualized voice message has an expiration time; and further comprising:
   receiving, by the processor, at a time after the expiration time, an indication that the second telecommunications device is attempting to initiate a voice call with the first telecommunications device;
   determining, by the processor, at a time after the expiration time, that the first user associated with the first telecommunications device is unavailable; and
   transmitting, by the processor, in response to receiving the indication that the second telecommunications device is attempting to initiate a voice call with the first telecommunications device at a time after the expiration time and determining that the first user is unavailable, a general voicemail message associated with the first telecommunications device.
4. The computer-implemented method of any one of the preceding aspects, in particular aspect 1, wherein determining that the first user is unavailable comprises:
   determining, by a processor, that the first telecommunications device is currently outside of a telecommunications network associated with the first MS.
5. The computer-implemented method of any one of the preceding aspects, in particular aspect 1, wherein determining that the first user is unavailable comprises:
   determining, by a processor, that the first telecommunications device has failed to accept the voice call initiated by the second telecommunications device within a threshold period of time.
6. The computer-implemented method of any one of the preceding aspects, in particular aspect 1, wherein determining that the first user is unavailable comprises:
   determining, by a processor, that the second telecommunications device has been designated as barred from contacting the first telecommunications device.
7. The computer-implemented method of any one of the preceding aspects, in particular aspect 1, wherein the first telecommunications device and the second telecommunications device are both associated with the same telecommunications network.
8. A system for automatically providing an individualized voice message to a specific individual who attempts to initiate a voice call with a user during a period of unavailability, comprising:
   a server within a telecommunications network associated with (i) a first telecommunications device associated with a first Mobile Station (MS) and (ii) a second telecommunications device associated with a second MS, the server comprising:
   one or more processors configured to interface with the first telecommunications device and the second telecommunications device; and
   a non-transitory program memory communicatively coupled to the one or more processors and storing executable instructions that, when executed by the one or more processors, cause the processors to:
      receive, from the first telecommunications device, an individualized voice message designated for the second telecommunications device;
      receive an indication that the second telecommunications device is attempting to initiate a voice call with the first telecommunications device;
      determine that a first user associated with the first telecommunications device is unavailable; and
      transmit, in response to receiving the indication that the second telecommunications device is attempting to initiate a voice call with the first telecommunications device and determining that the first user is unavailable, the individualized voice message to the second telecommunications device.
9. The system of any one of the preceding aspects, in particular aspect 8, wherein the executable instructions further cause the processors to:
   receive an indication that a third telecommunications device associated with a third MS is attempting to initiate a voice call with the first telecommunications device; and
   transmit, in response to receiving the indication that the third telecommunications device is attempting to initiate a voice call with the first telecommunications device and determining that the first user is unavailable, a general voicemail message associated with the first telecommunications device.
10. The system of any one of the preceding aspects, in particular aspect 8, wherein the individualized voice message has an expiration time; and wherein the executable instructions further cause the processors to:
   receive, at a time after the expiration time, an indication that the second telecommunications device is attempting to initiate a voice call with the first telecommunications device;
   determine, at a time after the expiration time, that the first user associated with the first telecommunications device is unavailable; and
   transmit, in response to receiving the indication that the second telecommunications device is attempting to initiate a voice call with the first telecommunications device at a time after the expiration time and determining that the first user is unavailable, a general voicemail message associated with the first telecommunications device.
11. The system of any one of the preceding aspects, in particular aspect 8, wherein the executable instructions that cause the processors to determine the first user is unavailable cause the processors to:
   determine that the first telecommunications device is currently outside of a telecommunications network associated with the first MS.
12. The system of any one of the preceding aspects, in particular aspect 8, wherein the executable instructions that cause the processors to determine the first user is unavailable cause the processors to:
   determine that the second telecommunications device has been barred from contacting the first telecommunications device.
13. The system of any one of the preceding aspects, in particular aspect 8, wherein the executable instructions that cause the processors to determine the first user is unavailable cause the processors to:
   determining, by a processor, that the first telecommunications device has failed to accept the voice call initiated by the second telecommunications device within a threshold period of time.
14. A tangible, non-transitory computer-readable medium storing executable instructions automatically providing an individualized voice message to a specific individual who attempts to initiate a voice call with a user during a period of unavailability, that, when executed by at least one processor of a computer system, cause the processor to:
   receive, from a first telecommunications device associated with a first Mobile Station (MS), an individualized voice message designated for a second telecommunications device associated with a second MS;
   receive an indication that the second telecommunications device is attempting to initiate a voice call with the first telecommunications device;
   determine that a first user associated with the first telecommunications device is unavailable; and
   transmit, in response to receiving the indication that the second telecommunications device is attempting to initiate a voice call with the first telecommunications device and determining that the first user is unavailable, the individualized voice message to the second telecommunications device.
15. The tangible, non-transitory computer-readable medium of any one of the preceding aspects, in particular aspect 14, wherein the executable instructions further cause the processor to:
   receive an indication that a third telecommunications device associated with a third MS is attempting to initiate a voice call with the first telecommunications device; and
   transmit, in response to receiving the indication that the third telecommunications device is attempting to initiate a voice call with the first telecommunications device and determining that the first user is unavailable, a general voicemail message associated with the first telecommunications device.
16. The tangible, non-transitory computer-readable medium of any one of the preceding aspects, in particular aspect 14, wherein the individualized voice message has an expiration time, and wherein the executable instructions further cause the processor to:
   receive, at a time after the expiration time, an indication that the second telecommunications device is attempting to initiate a voice call with the first telecommunications device;
   determine, at a time after the expiration time, that the first user associated with the first telecommunications device is not available; and
   transmit, in response to receiving the indication that the second telecommunications device is attempting to initiate a voice call with the first telecommunications device at a time after the expiration time and determining that the first user is unavailable, a general voicemail message associated with the first telecommunications device.
17. The tangible, non-transitory computer-readable medium of any one of the preceding aspects, in particular aspect 14, wherein the executable instructions that cause the processor to determine the first user is unavailable cause the processor to:
   determine that the first telecommunications device is currently outside of a telecommunications network associated with the first MS.
18. The tangible, non-transitory computer-readable medium of any one of the preceding aspects, in particular aspect 14, wherein the executable instructions that cause the processor to determine the first user is unavailable cause the processor to:
   determine that the first telecommunications device is currently turned off.
19. The tangible, non-transitory computer-readable medium of any one of the preceding aspects, in particular aspect 14, wherein the executable instructions that cause the processor to determine the first user is unavailable cause the processor to:
   determine that the first telecommunications device has failed to accept the voice call initiated by the second telecommunications device within a threshold period of time.
20. The tangible, non-transitory computer-readable medium of any one of the preceding aspects, in particular aspect 14, wherein the executable instructions that cause the processor to determine the first user is unavailable cause the processor to:
   determine that the second telecommunications device has been barred from contacting the first telecommunications device.

## Claims

1. A computer-implemented method for automatically providing an individualized voice message to a specific individual who attempts to initiate a voice call with a user during a period of unavailability, comprising:
receiving, by a processor, from a first telecommunications device associated with a first Mobile Station (MS), an individualized voice message designated for a second telecommunications device associated with a second MS;
receiving, by the processor, an indication that the second telecommunications device is attempting to initiate a voice call with the first telecommunications device;
determining, by the processor, that a first user associated with the first telecommunications device is unavailable; and
transmitting, by the processor, in response to receiving the indication that the second telecommunications device is attempting to initiate a voice call with the first telecommunications device and determining that the first user is unavailable, the individualized voice message to the second telecommunications device.

2. The computer-implemented method of claim 1, further comprising:
receiving, by the processor, an indication that a third telecommunications device associated with a third MS is attempting to initiate a voice call with the first telecommunications device; and
transmitting, by the processor, in response to receiving the indication that the third telecommunications device is attempting to initiate a voice call with the first telecommunications device and determining that the first user is unavailable, a general voicemail message associated with the first telecommunications device.

3. The computer-implemented method of either of claim 1 or claim 2, wherein the individualized voice message has an expiration time; and further comprising:
receiving, by the processor, at a time after the expiration time, an indication that the second telecommunications device is attempting to initiate a voice call with the first telecommunications device;
determining, by the processor, at a time after the expiration time, that the first user associated with the first telecommunications device is unavailable; and
transmitting, by the processor, in response to receiving the indication that the second telecommunications device is attempting to initiate a voice call with the first telecommunications device at a time after the expiration time and determining that the first user is unavailable, a general voicemail message associated with the first telecommunications device.

4. The computer-implemented method of any one of the preceding claims, wherein determining that the first user is unavailable comprises:
determining, by a processor, that the first telecommunications device is currently outside of a telecommunications network associated with the first MS.

5. The computer-implemented method of any one of the preceding claims, wherein determining that the first user is unavailable comprises:
determining, by a processor, that the first telecommunications device has failed to accept the voice call initiated by the second telecommunications device within a threshold period of time.

6. The computer-implemented method of any one of the preceding claims, wherein determining that the first user is unavailable comprises:
determining, by a processor, that the second telecommunications device has been designated as barred from contacting the first telecommunications device.

7. The computer-implemented method of any one of the preceding claims, wherein the first telecommunications device and the second telecommunications device are both associated with the same telecommunications network.

8. A system for automatically providing an individualized voice message to a specific individual who attempts to initiate a voice call with a user during a period of unavailability, comprising:
a server within a telecommunications network associated with (i) a first telecommunications device associated with a first Mobile Station (MS) and (ii) a second telecommunications device associated with a second MS, the server comprising:
one or more processors configured to interface with the first telecommunications device and the second telecommunications device; and
a non-transitory program memory communicatively coupled to the one or more processors and storing executable instructions that, when executed by the one or more processors, cause the processors to:
receive, from the first telecommunications device, an individualized voice message designated for the second telecommunications device;
receive an indication that the second telecommunications device is attempting to initiate a voice call with the first telecommunications device;
determine that a first user associated with the first telecommunications device is unavailable; and
transmit, in response to receiving the indication that the second telecommunications device is attempting to initiate a voice call with the first telecommunications device and determining that the first user is unavailable, the individualized voice message to the second telecommunications device.

9. The system of claim 8, wherein the executable instructions further cause the processors to:
receive an indication that a third telecommunications device associated with a third MS is attempting to initiate a voice call with the first telecommunications device; and
transmit, in response to receiving the indication that the third telecommunications device is attempting to initiate a voice call with the first telecommunications device and determining that the first user is unavailable, a general voicemail message associated with the first telecommunications device.

10. The system of either of claim 8 or claim 9, wherein the individualized voice message has an expiration time; and wherein the executable instructions further cause the processors to:
receive, at a time after the expiration time, an indication that the second telecommunications device is attempting to initiate a voice call with the first telecommunications device;
determine, at a time after the expiration time, that the first user associated with the first telecommunications device is unavailable; and
transmit, in response to receiving the indication that the second telecommunications device is attempting to initiate a voice call with the first telecommunications device at a time after the expiration time and determining that the first user is unavailable, a general voicemail message associated with the first telecommunications device.

11. The system of any one of claims 8 to 10, wherein the executable instructions that cause the processors to determine the first user is unavailable cause the processors to:
determine that the first telecommunications device is currently outside of a telecommunications network associated with the first MS.

12. The system of any one of claims 8 to 11, wherein the executable instructions that cause the processors to determine the first user is unavailable cause the processors to:
determine that the second telecommunications device has been barred from contacting the first telecommunications device.

13. The system of any one of claims 8 to 12, wherein the executable instructions that cause the processors to determine the first user is unavailable cause the processors to:
determining, by a processor, that the first telecommunications device has failed to accept the voice call initiated by the second telecommunications device within a threshold period of time.

14. A tangible, non-transitory computer-readable medium storing executable instructions automatically providing an individualized voice message to a specific individual who attempts to initiate a voice call with a user during a period of unavailability, that, when executed by at least one processor of a computer system, cause the processor to:
receive, from a first telecommunications device associated with a first Mobile Station (MS), an individualized voice message designated for a second telecommunications device associated with a second MS;
receive an indication that the second telecommunications device is attempting to initiate a voice call with the first telecommunications device;
determine that a first user associated with the first telecommunications device is unavailable; and
transmit, in response to receiving the indication that the second telecommunications device is attempting to initiate a voice call with the first telecommunications device and determining that the first user is unavailable, the individualized voice message to the second telecommunications device.

15. The tangible, non-transitory computer-readable medium of claim 14, wherein the executable instructions further cause the processor to:
receive an indication that a third telecommunications device associated with a third MS is attempting to initiate a voice call with the first telecommunications device; and
transmit, in response to receiving the indication that the third telecommunications device is attempting to initiate a voice call with the first telecommunications device and determining that the first user is unavailable, a general voicemail message associated with the first telecommunications device.
